# EUROPÄISCHE PATENTSCHRIFT

(11) **EP 2 510 510 B1**
(45) Veröffentlichungstag und Bekanntmachung des Hinweises auf die Patenterteilung: **16.01.2019**
(21) Anmeldenummer: 10803358.0
(22) Anmeldetag: 07.12.2010
(51) Int. Cl.: G08G 1/0967, G08G 1/16, G06K 9/00, G08G 1/0962

(54) **VERFAHREN ZUR UNTERSTÜTZUNG DES FAHRERS EINES STRAßENGEBUNDENEN FAHRZEUGS BEI DER FAHRZEUGFÜHRUNG**
METHOD FOR SUPPORTING THE DRIVER OF A ROAD-BOUND VEHICLE IN GUIDING THE VEHICLE
PROCÉDÉ D'ASSISTANCE AU CONDUCTEUR D'UN VÉHICULE ROUTIER POUR LE GUIDAGE DU VÉHICULE

(30) Priorität: 09.12.2009 DE 102009057553
(43) Veröffentlichungstag der Anmeldung: 17.10.2012
(73) Patentinhaber: Conti Temic Microelectronic GmbH, 90411 Nürnberg (DE)
(72) Erfinder: MEIS, Urban, 88131 Lindau (DE); WIEDEMANN, Christoph, 88142 Wasserburg (DE); KLEIN, Wladimir, 88131 Lindau (DE); ROTH, Axel, 88131 Lindau (DE); HILARIO, Mari, Joan, 80796 München (DE); KRISTENSEN, Steen, 88161 Lindenberg im Allgäu (DE); ZOBEL, Matthias, 88142 Wasserburg (DE)
(86) Internationale Anmeldenummer: PCT/DE2010/001416
(87) Internationale Veröffentlichungsnummer: WO 2011/069488

(56) Entgegenhaltungen:
- EP-A1- 2 116 984

## Beschreibung

Die Erfindung betrifft ein Verfahren zur Unterstützung des Fahrers eines straßengebundenen Fahrzeugs bei der Fahrzeugführung gemäß Oberbegriff des Patentanspruchs 1. Ferner betrifft die Erfindung eine Vorrichtung zur Durchführung des erfindungsgemäßen Verfahrens.
Es sind Fahrerassistenzsysteme bekannt, die den Fahrer bei der Längs- und/oder Querführung unterstützen oder diese Aufgabe selbstständig übernehmen, wie bspw. ACC (Adaptive Cruise Control), LDW (Lane Departure Warning), ISA (Intelligent Speed Adaption) oder Spurerkennungssysteme.
Die wesentliche Aufgabe solcher Systeme besteht darin, den Verlauf der befahrenen Fahrspur und deren seitliche Begrenzungen sicher zu erkennen, insbesondere hinsichtlich der ISA-Funktion Verkehrszeichen sicher, d. h. insbesondere mit einer geringen Zurückweisungsquote zu identifizieren.

So ist aus der EP2116984 ein kamerabasiertes Fahrerassistenzsystem bekannt und aus der DE 103 11 240 A1 eine Einrichtung zur Spurführung eines Fahrzeugs bekannt, bei der mittels einer Umfeldsensorik und mittels Auswertemittel Fahrbahn bzw. Fahrspur begrenzende Markierungen erfasst und ausgewertet werden, wobei in einer Speichervorrichtung länderspezifische Markierungsvorschriften für die Markierung von Fahrbahnen gespeichert sind. Zur Nutzung dieser Daten ist ein Navigationsgerät vorgesehen, mit dem der Standort des Fahrzeugs ermittelt wird.

Weiterhin ist aus der DE 103 43 941 A1 ein Verfahren bekannt, bei dem nach dem Überschreiten einer Ländergrenze oder bei einem bevorstehenden Überschreiten einer Ländergrenze die sich ändernden Verkehrsregeln ausgegeben werden. Dies umfasst bspw. eine Vorschrift für eine Lichtsteuerung des Fahrzeugs oder eine Vorschrift für eine Höchstgeschwindigkeit des Fahrzeugs. Auch bei diesem bekannten Verfahren wird die Position des Fahrzeugs mittels eines Navigationsgerätes, insbesondere über eine Satellitenortung bestimmt.

Ein Verfahren zur Verkehrszeichenerkennung mit der zusätzlichen Verwendung von Navigationsdaten ist bspw. aus der EP 1 114 371 B1 bekannt, bei dem nach dem Erkennen von Verkehrszeichen zur Lokalisierung des Fahrzeugs Navigationsdaten bereitgestellt und diese miteinander abgeglichen und ggf. aktualisiert werden. Hierzu werden diese Daten einer Auswerteeinheit zugeführt, eine aktuell gültige Geschwindigkeitsbeschränkung ermittelt und ggf. Steuersignale für ein Fahrerassistenzsystem generiert.

Diese bekannten Verfahren bzw. Systeme lösen jedoch noch nicht befriedigend das Problem, dass sich Fahrerassistenzsysteme an länderspezifische Merkmale anpassen müssen, so bspw. bei Fahrspurerkennungssysteme, wie LDW oder bei einer Verkehrszeichenerkennung. So könnte bspw. die Erkennungsleistung der in Verkehrszeichenerkennungssystemen zum Einsatz kommenden Klassifikatoren verbessert werden, wenn diese eine Information über das Land hätte, in dem sich das Fahrzeug gerade befindet. Auch könnten Fahrspurerkennungs-Algorithmen von einer solchen Information profitieren, um bspw. Mehrdeutigkeiten in den Fahrbahnmarkierungen aufzulösen.

Aufgabe der Erfindung ist es daher, ein verbessertes Verfahren zur Unterstützung des Fahrers eines straßengebundenen Fahrzeugs bei der Führung seines Fahrzeugs der eingangs genannten Art anzugeben, mit dem insbesondere Falschdetektionen hinsichtlich Fahrspur- und Verkehrszeichenerkennung reduzierbar sind.

Diese Aufgabe wird gelöst durch ein Verfahren mit den Merkmalen des Patentanspruchs 1.

Bei diesem Verfahren zur Unterstützung des Fahrers eines straßengebundenen Fahrzeugs bei der Fahrzeugführung, bei dem die die Fahrspuren einer Straße begrenzenden Markierungen und Verkehrszeichen mittels einer Umfeldsensorik erfasst und mittels eines Bildauswertungssystems ausgewertet werden, ist erfindungsgemäß vorgesehen, dass
- die Bilddaten der Umfeldsensorik hinsichtlich fahrspurrelevanten Informationen ausgewertet werden,
- die erkannten fahrspurrelevanten Informationen mittels in einer ersten Speichereinrichtung gespeicherten länderspezifische Fahrspurmarkierungen anzeigende Daten ausgewertet werden und ein dem aktuellen Ort des Fahrzeugs entsprechendes erstes Länderschätzsignal erzeugt wird,
- mittels eines Mikroprozessors aus dem ersten Länderschätzsignal ein den aktuellen Ort des Fahrzeugs anzeigendes Ländersignal erzeugt wird, und
- mit dem Ländersignal eine Fahrerinformationseinrichtung zur Ausgabe von die Längs- und Querführung des Fahrzeugs betreffenden länderspezifischen Informationen angesteuert wird und/oder das Ländersignal wenigstens einem die Längs- und/oder Querführung des Fahrzeugs unterstützendes Fahrerassistenzsystem zugeführt wird, und kennzeichnet sich dadurch, dass die fahrspurrelevanten Informationen als Merkmale erfasst werden, die die Fahrbahn beschreiben, wobei die Ausprägung dieser Merkmale umfasst:
   - Breite einer Fahrspurmarkierung,
   - Austastlücken und die Segmentlängen bei gestrichelten Fahrspurmarkierungen und/oder
   - Farbe der Fahrspurmarkierung.

Dabei werden zur Bestimmung eines Länderschätzsignals aus Fahrspuren einer Straße begrenzenden Markierungen bzw. zur Bestimmung eines ersten Länderschätzsignals fahrspurrelevante Informationen als Merkmale erfasst, die die Fahrbahn beschreiben, wie z. Bsp. Fahrspurmarkierungen, charakteristische Randbebauungen, Sperrflächen, oder sonstige landestypische Fahrbahnmarkierungen.

Detaillierte Ausprägungen solcher Merkmale sind bspw.:
- die Breite der Fahrspurmarkierung,
- die Austastlücken und die Segmentlängen bei gestrichelten Fahrspurmarkierungen,
- die Farbe der Markierung,
- die in den USA verwendeten Bott's Dots (Fahrstreifenmarkierungen),
- Ausprägungscharakteristiken v. Mehrfachmarkierungen als Kombination der zuvor genannten Merkmale,
- Geometrische Verhältnisse zwischen den Markierungen (z.B. Abstand zw. linker u. rechter Markierung, Breitenverhältnisse bei Mehrfachmarkierungen),
- Sonderzeichen wie Richtungspfeile bei Ausfahrten oder Überholverboten,
- Text u. Schriftzeichen auf der Straße,
- Farbe der Fahrbahn,
- Markierungen im Bereich v. Mautstellenzufahrten,
- Markierungen im Bereich v. Verkehrsinseln,
- bauliche Besonderheiten von Randsteinen,
- bauliche Besonderheiten von Leitplanken,
- Aussehen von Leitpfosten (Farbe, Geometrie, Reflektoreigenschaften), und
- Farbe der Straßenbeleuchtung.

Vorzugsweise wird das Ländersignal einem Verkehrszeichenerkennungssystem und/oder einem Kennzeichenermittlungssystem zugeführt.

Bei einem vorteilhaften Verfahren ist vorgesehen, dass
- die Bilddaten der Umfeldsensorik hinsichtlich verkehrszeichenrelevanten Informationen ausgewertet werden,
- die erkannten verkehrszeichenrelevanten Informationen mittels in einer zweiten Speichereinrichtung gespeicherten länderspezifische Verkehrszeichen anzeigende Daten ausgewertet werden und ein dem aktuellen Ort des Fahrzeugs entsprechendes zweites Länderschätzsignal erzeugt wird,
- mittels eines Fusionsmoduls aus dem ersten und zweiten Länderschätzsignal ein den aktuellen Ort des Fahrzeugs anzeigendes Ländersignal erzeugt wird, und
- mit dem Ländersignal eine Fahrerinformationseinrichtung zur Ausgabe von die Längs- und Querführung des Fahrzeugs betreffenden länderspezifischen Informationen angesteuert wird und/oder das Ländersignal wenigstens einem die Längs- und/oder Querführung des Fahrzeugs unterstützendes Fahrerassistenzsystem zugeführt wird.

Obwohl gemäß dem Wiener Übereinkommen über Straßenverkehrszeichen und dem Zusatzabkommen zur Konvention über Verkehrszeichen sich einige Länder teilweise auf eine Vereinheitlichung der Verkehrszeichen einigten, gibt es dennoch erheblich Unterschiede in der Ausprägung der Verkehrszeichen zwischen den Ländern. Daher werden zur Bestimmung eines Länderschätzsignals aus Bilddaten von Verkehrszeichen bzw. zur Bestimmung des zweiten Länderschätzsignals als verkehrszeichenrelevante Informationen bspw. folgende Merkmale erfasst:
- landesspezifische Ausprägungen der Verkehrszeichen, z. B. in Form, Größe, Farbe, Schrifttypen und Schriftsymbole, oder Bildsymbole in Tempo-Limit Zeichen,
- landesspezifische Größenverhältnisse mehrerer Schilder zueinander,
- landesspezifische Abfolge von Schildern, z. B. Geschwindigkeitstrichter vor einer Baustelle (wie bspw. 120km, 100km, 80km, 60km),
- landesspezifisches Vorkommen bzw. Fehlen von bestimmten Schildern oder Schildergruppen, z. B. Geschwindigkeitsbegrenzung "80" oder höher in England,
- landesspezifische Warnhinweisschilder (z. B. Kurve, Glätte)
- landesspezifischer Inhalt von Verkehrszeichen, z. B. Ortsnamen,
- Erkennung und Interpretation von Grenztafeln, und
- Erkennung und Interpretation von Info-Tafeln, z. B. landesweite Geschwindigkeitsbeschränkungshinweise an Grenzen.

Besonders vorteilhaft ist es, die aus diesen aufgeführten und detektierten Merkmalen abgeleiteten ersten und zweiten Länderschätzsignalen mittels des als Fusionsmodul ausgebildeten Mikroprozessors zu vernetzen, um eine hohe Treffsicherheit zu erzielen, d. h. mit hoher Wahrscheinlichkeit das Land zu bestimmten, in dem sich das Fahrzeug gerade befindet. Hierzu gewichtet und selektiert das Fusionsmodul die beiden Länderschätzsignale als Eingangswerte und erzeugt hieraus das eigentliche Ländersignal, das das Land angibt, in dem sich das Fahrzeug befindet.

Mit dem einer Fahrerinformationseinrichtung zugeführten Ländersignal werden für den Fahrer länderspezifische Informationen zur Verfügung gestellt, bspw. eine länderspezifische Höchstgeschwindigkeit auf Autobahnen.

Wenn ein solches Ländersignal einem Fahrerassistenzsystem zur Verfügung gestellt wird, können länderspezifische Verkehrsgesetze und Verkehrsnormen erfüllt werden, also bspw. durch entsprechende länderabhängige Parametrierung bei einem ACC-System der minimale Abstand zum vorausfahrenden Fahrzeug.

Ferner kann mit einem solchen Ländersignal zusammen mit einer Bestimmung der Straßenklasse als fahrspurrelevante Information ein implizites Tempolimit bestimmt werden und von einem Fahrerassistenzsystem zur Regelung der Fahrzeuggeschwindigkeit verwendet werden.

Weiterhin kann als Zusatzinformation für ein Navigationssystem, für die Warnstrategie eines LDW-Assistenzsystems oder für ein ACC-Assistenzsystem das Ländersignal zusammen mit der fahrspurrelevanten Information der Position der aktuellen, innerhalb der Straße verlaufenden Fahrspur dienen. Mit einem ACC-System kann der gesetzlich vorgeschriebene Abstand zum vorausfahrenden Fahrzeug länderspezifisch eingehalten werden.

Weitere Vorteile des erfindungsgemäßen Verfahrens ergeben sich durch die Möglichkeit, mit dem Ländersignal eine dynamische Anpassung von Algorithmen an die Ländergegebenheiten durchzuführen, damit der Anteil an falschen Detektionen reduziert wird.

Gemäß einer vorteilhaften Weiterbildung der Erfindung werden die Bilddaten der Umfeldsensorik hinsichtlich der Erkennung von Kraftfahrzeug-Kennzeichen ausgewertet, um hieraus mittels einer Häufigkeitsanalyse ein drittes Länderschätzsignal zu erzeugen, das dem Fusionsmodul zugeführt wird.

Da in der Regel verschiedene Funktionen für Fahrerassistenzsysteme auch in unterschiedlichen Komponenten des Fahrzeugs realisiert sind, kann mit Vorteil das Ländersignal einem Verkehrszeichenerkennungssystem zugeführt werden, um bspw. Verkehrszeichenklassifikatoren in Abhängigkeit des Ländersignals auszuwählen oder eine Parameteranpassung von Bildverarbeitungsalgorithmen, z. Bsp. Detektionsschwellen in Abhängigkeit des Ländersignals vorzunehmen. Hierdurch wird bei gleichzeitiger Reduktion einer Falsch-Detektion die Detektionsleistung maßgeblich erhöht.

Wird einem Spurerkennungssystem des Fahrzeugs das Ländersignal zugeführt, kann eine dynamische Anpassung von Algorithmen an die Ländergegebenheiten vorgenommen werden, um auch hier die Detektionsleistung bei gleichzeitiger Reduktion einer Falsch-Detektion zu erhöhen. So kann bspw. die Detektion von Botts' Dots auf das Land USA beschränkt werden, um damit evtl. Falschwarnungen aufgrund falsch erkannter Botts' Dots in anderen Ländern zu verhindern. Ein weiterer Vorteil besteht in der Einsparung von Rechenzeit, da spezielle Detektorstufen unter Umständen ganz abgeschaltet werden können (z.B. Bott's Dots Detektion, rechteckige Tempolimits in den USA, etc.).

Weitere Vorteile bestehen darin, dass eine semantische Interpretation der Szene korrekt abgeleitet werden kann, da
- Mehrfachmarkierungen in Japan semantisch teilweise entgegengesetzte Bedeutungen als in Europa haben; so dass sich dies nur mit einem Länderwissen, also mittels des Ländersignals modellieren lässt,
- eine Doppelmarkierung sich richtig interpretieren lässt, da bspw. ein Überholen nur erlaubt ist, wenn innerhalb der Fahrspur die Markierung gestrichelt, jedoch außerhalb der Fahrspur durchgezogen ist,
- eine Baustelle sich nur aufgrund der Markierungsfarbe in Abhängigkeit des Landes sich richtig erkennen lässt (bspw. ist in Deutschland die Markierungsfarbe einer Baustelle Gelb, in USA wird dagegen die Farbe Gelb als normale Markierung verwendet), und
- die Semantik von gestrichelten Markierungen sich von Land zu Land unterscheiden kann und u. a. abhängig von den Austastlücken / Segment - Längen ist (Beispiel: In Spanien u. Frankreich sind Außenmarkierungen von Autobahnen häufig "lang" gestrichelt).

Ferner ist es besonders vorteilhaft, wenn gemäß einer Weiterbildung der Erfindung aus den Fahrdaten des Fahrzeugs, insbesondere dessen Fahrgeschwindigkeit und den erkannten verkehrszeichenrelevanten Informationen die Maßeinheit, also km/h oder mph der auf den Verkehrszeichen erkannten Zahlenangaben bestimmt wird.

Weiterhin ist es vorteilhaft gemäß einer Weiterbildung der Erfindung als verkehrszeichenrelevanten Informationen landesspezifische Positionierungen der Verkehrszeichen sowohl lateral zur Fahrspur des Fahrzeugs als auch relativ zueinander zu erfassen, um hieraus bspw. zu schätzen, ob Links- oder Rechtsverkehr herrscht, um dies dem Fahrer mittels der Fahrerinformationseinrichtung anzuzeigen.

Gemäß einer Weiterbildung der Erfindung ist es auch vorteilhaft, die Farbe der Straßenbeleuchtung als fahrspurrelevante Information zu erfassen und zur Erzeugung des ersten Länderschätzsignals zu verwenden.

Weiterhin ist es gemäß einer Weiterbildung der Erfindung vorteilhaft, wenn Länder mit übereinstimmenden Merkmalen zu einer Ländergruppe oder einer Region zusammengefasst werden, so dass bei für mehrere Länder übereinstimmenden fahrspurrelevante und verkehrszeichenrelevante Informationen ein diese Länder oder eine entsprechende Ländergruppe anzeigendes Ländersignal von dem Fusionsmodul erzeugt wird.

Besonders vorteilhaft ist es, das Ländersignal das Ländersignal nichtflüchtig, insbesondere über einen Zündungslauf des Fahrzeugs zu speichern.

Eine Vorrichtung zur Durchführung des erfindungsgemäßen Verfahrens ist jeweils mit den Merkmalen des unabhängigen Patentanspruchs 12 gegeben.

Die Erfindung wird nachfolgend unter Bezugnahme auf die beigefügte einzige Figur näher erläutert. Diese Figur zeigt ein Blockschaltbild einer Vorrichtung zur Durchführung eines Ausführungsbeispiels des erfindungsgemäßen Verfahrens.

Diese in einem Fahrzeug installierte Vorrichtung umfasst eine als Kamera realisierte Umfeldsensorik 1, ein Spurerkennungssystem 2 mit einer zugehörigen ersten Speichereinrichtung 2a, einem Verkehrszeichenerkennungssystem 3 mit einer zugehörigen zweiten Speichereinrichtung 3a und einem Kennzeichenerkennungssystem 4 mit einer zugehörigen dritten Speichereinrichtung 4a. Diese genannten Systeme 2, 3 und 4 erhalten von der Kamera 1 Bilddaten der Fahrzeugumgebung. Die Kamera 1 ist in der Regel hinter der Windschutzscheibe im Bereich des Innenrückspiegels installiert und nach vorne gerichtet, so dass sowohl die Fahrbahn mit den vorausfahrenden Fahrzeugen als auch die Fahrbahnränder erfasst werden.

Das Spurerkennungssystem 2 umfasst ein Bildverarbeitungssystem, mit dem die erhaltenen Bilddaten bearbeitet und ausgewertet werden. Die Bilddaten der Kamera 1 werden hinsichtlich fahrspurrelevanten Informationen ausgewertet, indem die erkannten fahrspurrelevanten Informationen mittels in der ersten Speichereinrichtung 2a gespeicherten länderspezifische Fahrspurmarkierungen anzeigende Daten verglichen werden und ein dem aktuellen Ort des Fahrzeugs entsprechendes Länderschätzsignal S1 erzeugt wird, das einem Fusionsmodul 5, in der Regel ein Mikroprozessor zugeführt wird.

Das Verkehrszeichenerkennungssystem 3 umfasst ebenfalls ein Bildverarbeitungssystem, mit dem die erhaltenen Bilddaten bearbeitet und ausgewertet werden. Die Bilddaten der Kamera 1 werden hinsichtlich verkehrszeichenrelevanten Informationen ausgewertet, indem die erkannten verkehrszeichenrelevanten Informationen mittels in einer zweiten Speichereinrichtung 3a gespeicherten länderspezifische Verkehrszeichen anzeigende Daten verglichen werden und ein dem aktuellen Ort des Fahrzeugs entsprechendes zweites Länderschätzsignal S2 erzeugt wird. Auch dieses zweite Länderschätzsignal S2 wird dem Fusionsmodul 5 zugeführt.

Schließlich werden die Bilddaten auch von dem Kennzeichenermittlungssystem 4 bearbeitet und mittels den in seiner zugehörigen Speichereinrichtung 4a länderspezifische Fahrzeug-Kennzeichen anzeigende Daten verglichen und ein drittes Länderschätzsignal S3 dem Fusionsmodul 5 zugeführt. Alternativ kann die Vorrichtung auch ohne ein solches Kennzeichenermittlungssystem 4 realisiert werden.

Aus diesen drei Länderschätzsignalen S1, S2 und S3 ermittelt das Fusionsmodul 5 ein Ländersignal L, das in einem nichtflüchtigen Speicher 5a des Fusionsmoduls 5 wenigstens über eine Zündungslauf des Fahrzeugs gespeichert wird. Dieses Ländersignal L wird sowohl einer Fahrerinformationseinrichtung 6 und/oder einem Fahrerassistenzsystem 7, bspw. einem ACC-System oder einem Spurerkennungssystem, das bspw. eine Spurhaltefunktion und/oder Spurwechselassistent umfasst, zugeführt. Insbesondere kann ein ACC-System mit dem Ländersignal den länderspezifisch gesetzlich erlaubten Abstand zum vorausfahrenden Fahrzeug einstellen und in die entsprechende Regelung übernehmen.

Mit einer solchen Fahrerinformationseinrichtung 6 kann der Fahrer bspw. auf einer Autobahn über die geltende Geschwindigkeitsbegrenzung informiert werden, oder Hinweise über die in dem aktuellen Land geltenden Verkehrsbestimmungen und Verkehrsregeln informiert werden. Auch kann dem Fahrer angegeben werden, ob die Geschwindigkeitsanzeige in "km/h" oder "mph" erfolgt.

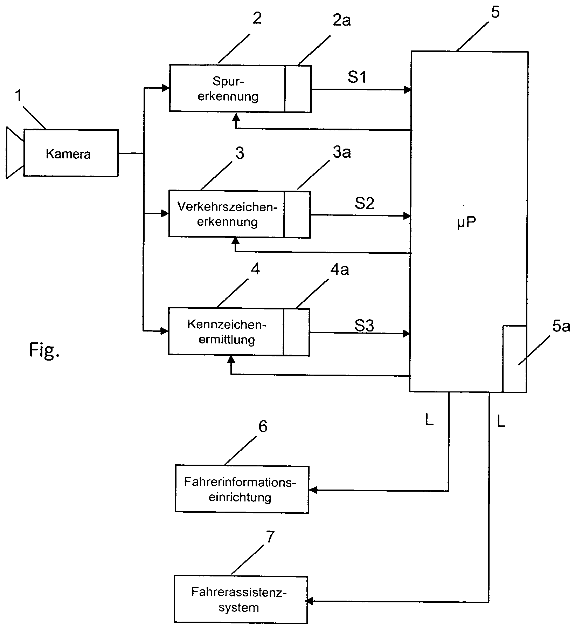

Alternativ kann die Vorrichtung nach Figur 1 zur Durchführung des erfindungsgemäßen Verfahrens auch so aufgebaut werden, dass lediglich das Bildverarbeitungssystem des Spurerkennungssystems 2 ein Länderschätzsignal S1 erzeugt, aus dem das Fusionsmodul 5 ein Ländersignal L erzeugt, das sowohl dem Spurerkennungssystem 3 als auch dem Kennzeichenermittlungssystem 4 zugeführt wird.

Eine weitere alternative Ausführungsform ergibt sich dadurch, dass anstellen des Bildverarbeitungssystems des Spurerkennungssystems 2 das Verkehrszeichenkennungssystem 3 ein Länderschätzsignal S2 erzeugt, das dann seinerseits als Ländersignal L dem Spurerkennungssystem 2 als auch dem Kennzeichenermittlungssystem 4 zugeführt wird.

Weiterhin kann anstelle des Bildverarbeitungssystems des Spurerkennungssystems 2 lediglich das Kennzeichenermittlungssystem 4 zur Erzeugung eines Länderschätzsignals S3 verwendet werden, so dass das daraus erzeugte Ländersignal L den anderen Systemen, also dem Spurerkennungssystem 2 als auch dem Verkehrszeichenerkennungssystem 3 zugeführt werden kann.

Schließlich ist es auch möglich, dass zwei dieser drei Systeme, also Spurerkennungssystem 2 und Verkehrszeichenerkennungssystem 3 oder Spurerkennungssystem 2 und Kennzeichenerkennungssystem 4 oder Verkehrszeichenerkennungssystem 3 und Kennzeichenerkennungssystem 4 jeweils ein Länderschätzsignal S1 und S2 oder S1 und S3 oder S2 und S3 erzeugen, aus denen mittels des Fusionsmodul 5 ein Ländersignal L erzeugt wird.

### Bezugszeichen

- 1: Umfeldsensorik, Kamera
- 2: Spurerkennungssystem
- 2a: erste Speichereinrichtung
- 3: Verkehrszeichenerkennung
- 3a: zweite Speichereinrichtung
- 4: Kennzeichenermittlung
- 4a: dritte Speichereinrichtung
- 5: Fusionsmodul, Mikroprozessor
- 5a: nichtflüchtiger Speicher des Mikroprozessors 5
- 6: Fahrerinformationseinrichtung
- 7: Fahrerassistenzsystem

## Patentansprüche

1. Verfahren zur Unterstützung des Fahrers eines straßengebundenen Fahrzeugs bei der Fahrzeugführung, bei dem die Fahrzeugumgebung, insbesondere die die Fahrspuren einer Straße begrenzenden Markierungen und Verkehrszeichen mittels einer Umfeldsensorik (1) erfasst und mittels eines Bildauswertungssystems ausgewertet werden,
wobei,
- die Bilddaten der Umfeldsensorik (1) hinsichtlich fahrspurrelevanten Informationen ausgewertet werden,
- die erkannten fahrspurrelevanten Informationen mittels in einer ersten Speichereinrichtung (2a) gespeicherten länderspezifische Fahrspurmarkierungen anzeigende Daten ausgewertet werden und ein dem aktuellen Ort des Fahrzeugs entsprechendes erstes Länderschätzsignal (S1) erzeugt wird,
- mittels eines Mikroprozessors (5) aus dem ersten Länderschätzsignal (S1) ein den aktuellen Ort des Fahrzeugs anzeigendes Ländersignal (L) erzeugt wird, und
- mit dem Ländersignal (L) eine Fahrerinformationseinrichtung (6) zur Ausgabe von die Längs- und Querführung des Fahrzeugs betreffenden länderspezifischen Informationen angesteuert wird und/oder das Ländersignal (L) wenigstens einem die Längs- und/oder Querführung des Fahrzeugs unterstützendes Fahrerassistenzsystem (7) zugeführt wird, **dadurch gekennzeichnet, dass**
die fahrspurrelevanten Informationen als Merkmale erfasst werden, die die Fahrbahn beschreiben, wobei die Ausprägung dieser Merkmale umfasst:
- Breite einer Fahrspurmarkierung,
- Austastlücken und die Segmentlängen bei gestrichelten Fahrspurmarkierungen oder
- Farbe der Fahrspurmarkierung.

2. Verfahren nach Anspruch 1,
**dadurch gekennzeichnet, dass**
die Ausprägung dieser Merkmale geometrische Verhältnisse zwischen den Fahrspurmarkierungen oder den Abstand zwischen linker und rechter Fahrspurmarkierung umfasst.

3. Verfahren nach Anspruch 1 oder 2,
**dadurch gekennzeichnet, dass**
die Ausprägung dieser Merkmale Sonderzeichen und/oder Text und Schriftzeichen auf der Straße umfasst.

4. Verfahren nach einem der vorhergehenden Ansprüche,
**dadurch gekennzeichnet, dass** Verkehrszeichen mittels einer Umfeldsensorik (1) erfasst und mittels eines Bildauswertungssystems ausgewertet werden, wobei
- die Bilddaten der Umfeldsensorik (1) hinsichtlich verkehrszeichenrelevanten Informationen ausgewertet werden,
- die erkannten verkehrszeichenrelevanten Informationen mittels in einer zweiten Speichereinrichtung (3a) gespeicherten länderspezifische Verkehrszeichen anzeigende Daten ausgewertet werden und ein dem aktuellen Ort des Fahrzeugs entsprechendes zweites Länderschätzsignal (S2) erzeugt wird,
- mittels eines als Fusionsmodul ausgebildeten Mikroprozessors (5) aus dem ersten und zweiten Länderschätzsignal (S1, S2) ein den aktuellen Ort des Fahrzeugs anzeigendes Ländersignal (L) erzeugt wird, und
- mit dem Ländersignal (L) eine Fahrerinformationseinrichtung (6) zur Ausgabe von die Längs- und Querführung des Fahrzeugs betreffenden länderspezifischen Informationen angesteuert wird und/oder das Ländersignal (L) wenigstens einem die Längs- und/oder Querführung des Fahrzeugs unterstützendes Fahrerassistenzsystem (7) zugeführt wird.

5. Verfahren nach Anspruch 4,
**dadurch gekennzeichnet, dass**
die Bilddaten der Umfeldsensorik (1) hinsichtlich der Erkennung von Kraftfahrzeug-Kennzeichen (4) ausgewertet werden und mittels einer Häufigkeitsanalyse ein drittes Länderschätzsignal (S3) erzeugt wird, das dem Fusionsmodul (5) zugeführt wird.

6. Verfahren nach einem der vorhergehenden Ansprüche,
**dadurch gekennzeichnet, dass**
das Ländersignal (L) einem Verkehrszeichenerkennungssystem (3) zugeführt wird.

7. Verfahren nach einem der vorhergehenden Ansprüche,
**dadurch gekennzeichnet, dass**
das Ländersignal (L) einem Spurerkennungssystem (2) zugeführt wird.

8. Verfahren nach einem Ansprüche 4 bis 7,
**dadurch gekennzeichnet, dass**
die verkehrszeichenrelevanten Informationen landesspezifische Positionierungen der Verkehrszeichen sowohl lateral zur Fahrspur des Fahrzeugs als auch relativ zueinander umfassen.

9. Verfahren nach einem der vorhergehenden Ansprüche,
**dadurch gekennzeichnet, dass**
die Farbe der Straße als fahrspurrelevante Information erfasst wird und zur Erzeugung des ersten Länderschätzsignals (S1) verwendet wird.

10. Verfahren nach einem der vorhergehenden Ansprüche,
**dadurch gekennzeichnet, dass**
bei für mehrere Länder übereinstimmenden fahrspurrelevante und/oder verkehrszeichenrelevante Informationen ein diese Länder oder eine entsprechende Ländergruppe anzeigendes Länderschätzsignal (S1, S2, S3) oder Ländersignal (L) erzeugt wird.

11. Verfahren nach einem der vorhergehenden Ansprüche,
**dadurch gekennzeichnet, dass**
das Ländersignal (L) nichtflüchtig gespeichert wird, insbesondere über einen Zündungslauf des Fahrzeugs.

12. Vorrichtung zur Unterstützung des Fahrers eines straßengebundenen Fahrzeugs bei der Fahrzeugführung, bei dem die Fahrzeugumgebung, insbesondere die die Fahrspuren einer Straße begrenzenden Markierungen und Verkehrszeichen mittels einer Umfeldsensorik (1) erfasst und mittels eines Bildauswertungssystem ausgewertet werden,
wobei,
- die Bilddaten der Umfeldsensorik (1) mittels eines ersten Bildverarbeitungssystems (2) hinsichtlich fahrspurrelevanten Informationen ausgewertet werden,
- die erkannten fahrspurrelevanten Informationen mittels in einer Speichereinrichtung (2a) des ersten Bildverarbeitungssystems (2) gespeicherten länderspezifische Fahrspurmarkierungen anzeigende Daten ausgewertet werden und ein dem aktuellen Ort des Fahrzeugs entsprechendes erstes Länderschätzsignal (S1) erzeugt wird,
- mittels eines Mikroprozessors (5) aus dem ersten Länderschätzsignal (S1) ein den aktuellen Ort des Fahrzeugs anzeigendes Ländersignal (L) erzeugt wird, und
- mit dem Ländersignal (L) eine Fahrerinformationseinrichtung (6) zur Ausgabe von die Längs- und Querführung des Fahrzeugs betreffenden länderspezifischen Informationen angesteuert wird und/oder das Ländersignal wenigstens einem die Längs- und/oder Querführung des Fahrzeugs unterstützendes Fahrerassistenzsystem (7) zugeführt wird, **dadurch gekennzeichnet, dass**
die fahrspurrelevanten Informationen als Merkmale erfasst werden, die die Fahrbahn beschreiben, wobei die Ausprägung dieser Merkmale umfasst:
- Breite einer Fahrspurmarkierung,
- Austastlücken und die Segmentlängen bei gestrichelten Fahrspurmarkierungen und/oder
- Farbe der Fahrspurmarkierung.

13. Vorrichtung nach Anspruch 12,
**dadurch gekennzeichnet dass**,
- die Bilddaten der Umfeldsensorik (1) mittels eines zweiten Bildverarbeitungssystems (3) hinsichtlich verkehrszeichenrelevanten Informationen ausgewertet werden,
- die erkannten verkehrszeichenrelevanten Informationen mittels in einer zweiten Speichereinrichtung (3a) des zweiten Bildverarbeitungssystems (3) gespeicherten länderspezifische Verkehrszeichen anzeigende Daten ausgewertet werden und ein dem aktuellen Ort des Fahrzeugs entsprechendes zweites Länderschätzsignal (S2) erzeugt wird,
- mittels eines Fusionsmoduls (5) aus dem ersten und zweiten Länderschätzsignal (S1, S2) ein den aktuellen Ort des Fahrzeugs anzeigendes Ländersignal (L) erzeugt wird, und
- mit dem Ländersignal (L) eine Fahrerinformationseinrichtung (6) zur Ausgabe von die Längs- und Querführung des Fahrzeugs betreffenden länderspezifischen Informationen angesteuert wird und/oder das Ländersignal wenigstens einem die Längs- und/oder Querführung des Fahrzeugs unterstützendes Fahrerassistenzsystem (7) zugeführt wird.

## Claims

1. A method for supporting the driver of a road-bound vehicle in guiding the vehicle, in which the vehicle surroundings, in particular the markings that delimit the lanes of a road and traffic signs, are detected by means of an environment sensor system (1) and evaluated by means of an image evaluation system,
wherein
- the image data of the environment sensor system (1) are evaluated with regard to lane-relevant information,
- the recognised lane-relevant information is evaluated by means of data that are stored in a first memory device (2a) and that indicate country-specific lane markings, and a first country estimation signal (S1) corresponding to the current location of the vehicle is produced,
- a country signal (L) that indicates the current location of the vehicle is produced from the first country estimation signal (S1) by means of a microprocessor (5), and
- a driver information device (6) for outputting country-specific information regarding the longitudinal and transverse guidance of the vehicle is activated with the country signal (L), and/or the country signal (L) is fed to at least one driver assistance system (7) that supports the longitudinal and/or transverse guidance of the vehicle, **characterised in that**
the lane-relevant information is detected as features which delineate the carriageway, wherein the characteristics of these features comprise:
- width of a lane marking,
- blanking intervals and the segment lengths for dashed lane markings, or
- colour of the lane marking.

2. The method according to Claim 1,
**characterised in that**
the characteristics of said features comprise geometrical relationships between the lane markings or the distance between the left and right lane marking.

3. The method according to Claim 1 or 2,
**characterised in that**
the characteristics of said features comprise special symbols and/or text and characters on the road.

4. The method according to any one of the preceding claims, **characterised in that** traffic signs are detected by means of an environment sensor system (1) and evaluated by means of an image evaluation system, wherein
- the image data of the environment sensor system (1) are evaluated with regard to traffic sign-relevant information,
- the recognised traffic sign-relevant information is evaluated by means of data that are stored in a second memory device (3a) and that indicate country-specific traffic signs, and a second country estimation signal (S2) corresponding to the current location of the vehicle is produced,
- a country signal (L) that indicates the current location of the vehicle is produced from the first and second country estimation signal (S1, S2) by means of a microprocessor (5) which is configured as a fusion module, and
- a driver information device (6) for outputting country-specific information regarding the longitudinal and transverse guidance of the vehicle is activated with the country signal (L), and/or the country signal (L) is fed to at least one driver assistance system (7) that supports the longitudinal and/or transverse guidance of the vehicle.

5. The method according to Claim 4,
**characterised in that**
the image data of the environment sensor system (1) are evaluated with regard to the recognition of motor vehicle number plates (4), and a third country estimation signal (S3) is produced by means of a frequency analysis, said signal being fed to the fusion module (5).

6. The method according to any one of the preceding claims,
**characterised in that**
the country signal (L) is fed to a traffic sign recognition system (3).

7. The method according to any one of the preceding claims,
**characterised in that**
the country signal (L) is fed to a lane recognition system (2).

8. The method according to any one of Claims 4 to 7,
**characterised in that**
the traffic sign-relevant information comprises country-specific positionings of the traffic signs, both laterally to the lane of the vehicle and relative to one another.

9. The method according to any one of the preceding claims,
**characterised in that**
the colour of the road is detected as lane-relevant information and is used to produce the first country estimation signal (S1).

10. The method according to any one of the preceding claims,
**characterised in that**
in the event that lane-relevant and/or traffic sign-relevant information for multiple countries are identical, a country estimation signal (S1, S2, S3) or country signal (L) that indicates these countries or a corresponding group of countries is produced.

11. The method according to any one of the preceding claims,
**characterised in that**
the country signal (L) is stored in a non-volatile manner, in particular by means of an ignition process of the vehicle.

12. A device for supporting the driver of a road-bound vehicle in guiding the vehicle, in which the vehicle surroundings, in particular the markings that delimit the lanes of a road and traffic signs, are detected by means of an environment sensor system (1) and evaluated by means of an image evaluation system,
wherein,
- the image data of the environment sensor system (1) are evaluated by means of a first image processing system (2) with regard to lane-relevant information,
- the recognised lane-relevant information is evaluated by means of data that are stored in a memory device (2a) of the first image processing system (2) and that indicate country-specific lane markings, and a first country estimation signal (S1) corresponding to the current location of the vehicle is produced,
- a country signal (L) that indicates the current location of the vehicle is produced from the first country estimation signal (S1) by means of a microprocessor (5), and
- a driver information device (6) for outputting country-specific information regarding the longitudinal and transverse guidance of the vehicle is activated with the country signal (L), and/or the country signal (L) is fed to at least one driver assistance system (7) that supports the longitudinal and/or transverse guidance of the vehicle, **characterised in that**
the lane-relevant information is detected as features which delineate the carriageway, wherein the characteristics of these features comprise:
- width of a lane marking,
- blanking intervals and the segment lengths for dashed lane markings, and/or
- colour of the lane marking.

13. The device according to Claim 12,
**characterised in that**
- the image data of the environment sensor system (1) are evaluated by means of a second image processing system (3) with regard to traffic sign-relevant information,
- the recognised traffic sign-relevant information is evaluated by means of data that are stored in a second memory device (3a) of the second image processing system (3) and that indicate country-specific traffic signs, and a second country estimation signal (S2) corresponding to the current location of the vehicle is produced,
- a country signal (L) that indicates the current location of the vehicle is produced from the first and second country estimation signal (S1, S2) by means of a fusion module (5), and
- a driver information device (6) for outputting country-specific information regarding the longitudinal and transverse guidance of the vehicle is activated with the country signal (L), and/or the country signal (L) is fed to at least one driver assistance system (7) that supports the longitudinal and/or transverse guidance of the vehicle.

## Revendications

1. Procédé pour l'assistance au conducteur d'un véhicule routier pour le guidage du véhicule, sur lequel l'environnement de véhicule, en particulier les marquages et panneaux de circulation délimitant les voies de circulation d'une route, est détecté au moyen d'un système de capteurs d'environnement (1) et analysés au moyen d'un système d'analyse d'images,
- les données d'images du système de capteurs d'environnement (1) étant analysées relativement aux informations concernant les voies de circulation,
- les informations concernant les voies de circulation détectées étant analysées au moyen de données affichant les marquages de voies spécifiques aux pays enregistrées dans un premier dispositif d'enregistrement (2a), et un premier signal d'estimation de pays (S1) correspondant à l'emplacement actuel du véhicule étant généré,
- un signal de pays (L) affichant l'emplacement actuel du véhicule étant généré au moyen d'un microprocesseur (5) à partir du premier signal d'estimation de pays (S1), et
- un dispositif d'information au conducteur (6) pour la sortie d'informations spécifiques au pays concernant le guidage longitudinal et transversal du véhicule étant piloté avec le signal de pays (L) et/ou le signal de pays (L) étant amené à au moins un système d'assistance au conducteur (7) supportant le guidage longitudinal et/ou transversal du véhicule, **caractérisé en ce que**
les informations concernant les voies de circulation sont détectées comme caractéristiques décrivant la chaussée, la forme de ces caractéristiques comprenant :
- la largeur d'un marquage de voie,
- les intervalles de séparation et les longueurs de segments dans le cas de marquages de voies discontinues ou
- la couleur du marquage de voie.

2. Procédé selon la revendication 1,
**caractérisé en ce que**
la forme de ces caractéristiques comprend des rapports géométriques entre les marquages de voies ou la distance entre le marquage de voie gauche et le marquage de voie droite.

3. Procédé selon la revendication 1 ou 2,
**caractérisé en ce que**
la forme de ces caractéristiques comprend des signes spéciaux et/ou du texte et des caractères sur la route.

4. Procédé selon l'une quelconque des revendications précédentes,
**caractérisé en ce que**
les panneaux de signalisation sont détectés au moyen d'un système de capteurs d'environnement (1) et sont analysés au moyen d'un système d'analyse d'images,
- les données d'images du système de capteurs d'environnement (1) étant analysées relativement aux informations concernant les panneaux de signalisation,
- les informations concernant les panneaux de signalisation détectées étant analysées au moyen de données affichant les panneaux de signalisation spécifiques aux pays enregistrées dans un deuxième dispositif d'enregistrement (3a), et un deuxième signal d'estimation de pays (S2) correspondant à l'emplacement actuel du véhicule étant généré,
- un signal de pays (L) affichant l'emplacement actuel du véhicule étant généré au moyen d'un microprocesseur (5) formé comme un module de fusion, à partir du premier et du deuxième signal d'estimation de pays (S1, S2), et
- un dispositif d'information au conducteur (6) pour la sortie d'informations spécifiques au pays concernant le guidage longitudinal et transversal du véhicule étant piloté avec le signal de pays (L) et/ou le signal de pays (L) étant amené à au moins un système d'assistance au conducteur (7) supportant le guidage longitudinal et/ou transversal du véhicule.

5. Procédé selon la revendication 4,
**caractérisé en ce que**
les données d'images du système de capteurs d'environnement (1) sont analysées relativement à la détection de plaques d'immatriculation de véhicules (4), et un troisième signal d'estimation de pays (S3) est généré au moyen d'une analyse de fréquence, lequel signal est amené au module de fusion (5).

6. Procédé selon l'une quelconque des revendications précédentes,
**caractérisé en ce que**
le signal de pays (L) est amené à un système de détection de panneaux de signalisation (3).

7. Procédé selon l'une quelconque des revendications précédentes,
**caractérisé en ce que**
le signal de pays (L) est amené à un système de détection de voies (2).

8. Procédé selon l'une des revendications 4 à 7,
**caractérisé en ce que**
les informations concernant les panneaux de signalisation comprennent des positionnements spécifiques aux pays des panneaux de signalisation, aussi bien latéralement par rapport à la voie de circulation du véhicule que relativement les uns aux autres.

9. Procédé selon l'une quelconque des revendications précédentes, **caractérisé en ce que**
la couleur de la route est détectée comme information concernant la voie de circulation et est utilisée pour la génération du premier signal d'estimation de pays (S1).

10. Procédé selon l'une quelconque des revendications précédentes, **caractérisé en ce que**,
en cas d'informations concernant les voies de circulation et/ou concernant les panneaux de signalisation concordants pour plusieurs pays, un signal d'estimation de pays (S1, S2, S3) ou un signal de pays (L) affichant ces pays ou un groupe de pays correspondant est généré.

11. Procédé selon l'une quelconque des revendications précédentes, **caractérisé en ce que**
le signal de pays (L) est enregistré de façon non volatile, en particulier par un allumage du véhicule.

12. Dispositif pour l'assistance au conducteur d'un véhicule routier pour le guidage du véhicule, sur lequel l'environnement de véhicule, en particulier les marquages et panneaux de signalisation délimitant les voies de circulation d'une route, est détecté au moyen d'un système de capteurs d'environnement (1) et analysés au moyen d'un système d'analyse d'images,
- les données d'images du système de capteurs d'environnement (1) étant analysées relativement à des informations concernant les voies de circulation au moyen d'un premier système de traitement d'images (2),
- les informations concernant les voies de circulation détectées étant analysées au moyen de données affichant les marquages de voies spécifiques aux pays enregistrées dans un dispositif d'enregistrement (2a) du premier système de traitement d'images (2), et un premier signal d'estimation de pays (S1) correspondant à l'emplacement actuel du véhicule étant généré,
- un signal de pays (L) affichant l'emplacement actuel du véhicule étant généré au moyen d'un microprocesseur (5) à partir du premier signal d'estimation de pays (S1), et
- un dispositif d'information au conducteur (6) pour la sortie d'informations spécifiques au pays concernant le guidage longitudinal et transversal du véhicule étant piloté avec le signal de pays (L), et/ou le signal de pays (L) étant amené à au moins un système d'assistance au conducteur (7) supportant le guidage longitudinal et/ou transversal du véhicule, **caractérisé en ce que**
les informations concernant les voies de circulation sont détectées comme caractéristiques décrivant la chaussée, la forme de ces caractéristiques comprenant :
- la largeur d'un marquage de voie,
- les intervalles de séparation et les longueurs de segments dans le cas de marquages de voies discontinues et/ou
- la couleur du marquage de voie.

13. Dispositif selon la revendication 12,
**caractérisé en ce que**
- les données d'images du système de capteurs d'environnement (1) sont analysées relativement à des informations concernant les panneaux de signalisation au moyen d'un deuxième système de traitement d'images (3),
- les informations concernant les panneaux de signalisation détectées sont analysées au moyen de données affichant les panneaux de signalisation spécifiques aux pays enregistrées dans un deuxième dispositif d'enregistrement (3a) du deuxième système de traitement d'images (3), et un deuxième signal d'estimation de pays (S2) correspondant à l'emplacement actuel du véhicule est généré,
- un signal de pays (L) affichant l'emplacement actuel du véhicule est généré au moyen d'un module de fusion (5) à partir du premier et du deuxième signal d'estimation de pays (S1, S2), et
- un dispositif d'information au conducteur (6) pour la sortie d'informations spécifiques au pays concernant le guidage longitudinal et transversal du véhicule étant piloté avec le signal de pays (L), et/ou le signal de pays étant amené à au moins un système d'assistance au conducteur (7) supportant le guidage longitudinal et/ou transversal du véhicule.
